# FASCICULE DE BREVET EUROPEEN

(11) **EP 1 973 410 B1**
(45) Date de publication et mention de la délivrance du brevet: **16.10.2013**
(21) Numéro de dépôt: 07718119.6
(22) Date de dépôt: 22.01.2007
(51) Int. Cl.: A21C 5/02

(54) **PROCEDE DE DIVISION VOLUMETRIQUE DE PATE**
VERFAHREN ZUR MENGENTEILUNG VON TEIG
METHOD FOR VOLUME DIVISION OF DOUGH

(30) Priorité: 20.01.2006 FR 0650199; 06.02.2006 FR 0650413; 20.03.2006 FR 0650944
(43) Date de publication de la demande: 01.10.2008
(73) Titulaire: MECATHERM, Société Anonyme, 67130 Barembach (FR)
(72) Inventeur: VOEGTLIN, Claude, F-67370 Pfulgriesheim (FR)
(74) Mandataire: Rhein, Alain
(86) Numéro de dépôt international: PCT/FR2007/050672
(87) Numéro de publication internationale: WO 2007/083070

(56) Documents cités:
- EP-A1- 1 021 955
- EP-A1- 1 064 847
- WO-A-86/01975
- WO-A-2004/043151
- WO-A-2005/102620
- DE-A1- 2 329 932
- DE-C- 951 081
- ES-A2- 2 076 870
- FR-A- 1 176 715
- FR-A- 2 145 894
- FR-A- 2 172 446
- FR-A- 2 601 231
- FR-A1- 2 345 926
- FR-A1- 2 484 085
- NL-C- 81 915
- US-A- 2 604 351

## Description

La présente invention concerne un procédé de division volumétrique de pâte de boulangerie, viennoiserie pâtisserie ou analogue, contenue dans une trémie.

La présente invention entre dans le domaine du traitement de pâte de boulangerie, viennoiserie, pâtisserie ou analogue.

De manière connue, la division volumétrique de pâte de boulangerie en pâtons s'effectue au travers d'une trémie destinée à recevoir ladite pâte, cette dernière étant stockée en partie basse de la trémie par gravitation naturelle de la pâte s'écoulant le long des parois inclinées de ladite trémie. Cette dernière débouche en partie basse dans une chambre dite « de gavage » dans la mesure où la pâte y est entraînée par aspiration sous l'action de pistons. Ces derniers, au nombre de cinq ou six, voire tout au plus de douze pour la confection de petits pains, sont disposés contigus sur toute la longueur de la trémie et sont en déplacement horizontal transversal par rapport à l'axe longitudinal de ladite trémie.

Une fois la quantité de pâte aspirée dans la chambre de gavage, cette dernière est séparée de la partie basse de la trémie au moyen d'un couteau, coulissant et refermant ainsi ladite chambre. Il convient de noter que ledit couteau referme partiellement l'ouverture en partie basse de la trémie, afin d'autoriser la compression de la quantité de pâte recueillie au sein de la chambre de gavage, au travers du déplacement des pistons en sens inverse. En effet, l'étanchéité de la chambre n'est pas réalisée au niveau de la partie basse de la trémie pour permettre l'évacuation, selon le cas, de l'air encore contenu dans la chambre de gavage ou d'un surplus de pâte. Par conséquent, au cours de l'opération de compression qui suit la fermeture de la chambre par le couteau, la pâte en excès peut retourner dans la trémie.

A ce propos, la chambre de gavage est disposée en vis-à-vis d'une chambre de dosage, chacune comprenant réciproquement un piston de gavage et un piston de dosage. Comme évoqué précédemment, le piston de gavage aspire la pâte de la trémie pour ensuite la comprimer vers la chambre de dosage. Le mouvement de compression de la pâte par le piston gaveur repousse le piston doseur qui recule alors jusqu'à une position arrière en butée. Cette butée est prévue réglable pour limiter la course du piston doseur, faisant varier en conséquence le volume de la chambre de dosage et la taille des pâtons réalisés.

Un premier inconvénient de l'état de la technique provient des contraintes très élevées appliquées à la pâte lors de sa succion et de sa compression. L'aspiration de la pâte provoque son déchirement et la compression qui suit conduit à un ressuage, autrement dit à une évacuation d'une partie de l'eau contenue dans la pâte. Simultanément, il y a destruction des réseaux gazeux qui se sont formés par fermentation au cours du séjour de la pâte dans la trémie. Ainsi, la densité de la pâte tend à augmenter fortement pour atteindre des valeurs de l'ordre de 1,2 à 1,3. Les tensions emmagasinées dans la pâte, matériau possédant une élasticité et une mémoire de forme, ressortiront lors du travail des pâtons, entraînant une irrégularité dans les produits obtenus.

Par ailleurs, une fois la pâte enfermée et comprimée dans la chambre de gavage, par déplacement simultanément du piston de gavage et du piston doseur, on vient décaler cette chambre de manière à faire coïncider le piston doseur et le pâton, ainsi défini, avec un couloir d'extraction vertical. S'en suit un décalage vertical de ce piston doseur et dudit pâton pour atteindre une position d'évacuation dans laquelle le piston doseur vient éjecter le pâton sur un tapis roulant. Cette évacuation est réalisée par une poussée horizontale du piston doseur, les pâtons glissants de la chambre sur ledit tapis.

Sans compter que sous l'influence du piston doseur, la pâte est une nouvelle fois sollicitée, ce cycle d'évacuation est relativement complexe, susceptible de générer et de limiter la cadence de production.

Selon une autre solution connue, notamment par le document FR 2 172 446, qui décrit un procédé de division volumétrique de pâte comprenant les caractéristiques du préambule de la revendication 1, l'évacuation des pâtons après division est assurée directement par le piston doseur, après pivotement de la chambre de gavage selon un angle de rotation de 45°.

De même, il est connu, par le document FR 1 176 715, de décaler verticalement la chambre de gavage et son piston avant de l'orienter suivant un angle d'inclinaison donné pour pouvoir repousser le pâton sur le tapis d'évacuation.

Tout d'abord, on observera que, dans chacune des solutions proposées par ces documents antérieurs, la pâte est, soit poussée, soit aspirée depuis la trémie pour le dosage et la division. Cette pâte est donc soumise à des contraintes préjudiciables à la qualité du produit final à obtenir.

Par ailleurs, si les dispositifs décrits dans ces deux documents de l'état de la technique améliorent l'opération d'extraction d'un pâton, ils n'apportent pas entière satisfaction. En effet, la poussée du pâton hors de sa chambre le déforme en raison des frottements qu'il subit le long des parois. Cette résistance à l'extraction est accrue dans le cas d'une pâte très douce. En effet, cette pâte est d'autant plus fluide et collante qu'elle est hydratée, rendant son extraction très délicate.

Comme cela vient d'être indiqué, ces dispositifs ont pour conséquence de délivrer des pâtons déformés en sortie de diviseuse, de sorte qu'il est nécessaire de prévoir une opération additionnelle pour conformer ces pâtons si l'on souhaite obtenir un produit final de forme régulière.

A cela il faut ajouter qu'il est connu, par le document WO 2004/043151, de saisir, au moyen d'aiguilles, des produits de boulangerie cuits afin de les extraire de leur moule. Ces aiguilles sont disposées en vis-à-vis de manière à pouvoir enserrer le produit en vue de cette extraction du moule. Cependant, cela n'a été envisagé que pour des produits cuits, donc ayant une certaine rigidité et cohésion.

La présente invention a pour but de remédier aux inconvénients de cet état de la technique. Ainsi, c'est dans le cadre d'une première démarche inventive qu'il a été envisagé la prise en charge de la pâte depuis la trémie en vue de la division par simple gravité, ceci en allant à l'encontre des préjugés de l'homme du métier, pensant qu'un tel écoulement de la pâte par gravité est totalement incapable de satisfaire les cadences habituelles de productions industrielles de produits de boulangerie et similaires.

Par ailleurs, selon une autre caractéristique de l'invention on a imaginé, après division, d'extraire les pâtons de leur compartiment dans la chambre de division grâce à des moyens de préhension conçus apte à saisir le pâton pour le déposer sur un tapis d'évacuation, plutôt que le repousser sur ce tapis. En somme, cette caractéristique a su mettre en évidence que l'on peut maitriser la déformation des pâtons en les saisissant, plutôt qu'en les repoussant, pour les extraire de leur logement.

Les moyens de préhension peuvent se présenter sous forme d'aiguilles, bien que le produit à saisir est, non pas rigide et cuit, mais aussi fluide et malléable que peut l'être une pâte fraîche, fortement hydratée. En somme l'invention a su aller à l'encontre des a priori de l'homme du métier.

Ainsi, la présente invention a trait à un procédé de division volumétrique de pâte de boulangerie, viennoiserie pâtisserie ou analogue selon la revendication 1.

Selon une autre caractéristique de l'invention, on accompagne la pâte s'écoulant dans la chambre au travers d'un fond mobile que comporte cette dernière.

Tout particulièrement, on dose la quantité de pâte à diviser au travers de la course conférée audit fond mobile.

Selon encore une autre caractéristique de l'invention, on saisit individuellement chaque pâton divisé de la chambre pour le déposer sur ledit support.

Préférentiellement, on accompagne les pâtons au cours de leur extraction par les moyens de préhension au travers du fond mobile de la chambre subdivisé en une pluralité de pistons commandés individuellement ou par groupe.

Les avantages qui découlent de la présente invention consistent, de manière essentielle, en ce que la pâte ne subit pas de contrainte de type compression. Son prélèvement depuis la trémie intervient par simple gravité. De manière inattendue, la présente invention permet, pour autant d'atteindre des cadences équivalentes aux solutions antérieures qui, pourtant assuraient un prélèvement par succion ou pression, donc mécaniquement, de la pâte de cette trémie. Ce résultat est obtenu grâce à une chambre comportant un grand nombre de compartiments, alors que le raisonnement de l'état de la technique consistait à limiter, voire réduire au minimum ces compartiments pour contenir la puissance d'aspiration nécessaire.

Ainsi, paradoxalement, au travers de la présente invention, au moment de la division de la pâte en pâtons, cette pâte ne subit aucune sollicitation qui en altère les caractéristiques physique, pour autant l'opération de division ne constitue pas un facteur limitant dans une chaîne de production de produits de boulangerie.

De plus, l'invention améliore l'uniformité des pâtons et leur dépose au travers d'un mode d'extraction s'adaptant aux pâtes les plus douces.

D'autres caractéristiques et avantages de l'invention ressortiront de la description détaillée qui va suivre des modes de réalisation non limitatifs de l'invention, en référence aux figures annexées dans lesquelles :
- la figure 1 représente une vue schématisée en perspective d'une partie du dispositif permettant de mettre en oeuvre le procédé selon l'invention ; et
- les figures 2 à 8 sont des représentations schématiques en coupe des étapes principales du procédé selon l'invention ;

La présente invention concerne la division volumétrique de pâte 1 de boulangerie, viennoiserie, pâtisserie ou analogue en pâtons 2.

Pour ce faire, la pâte 1 est contenue dans une trémie 3 conformée en entonnoir pour permettre l'écoulement de ladite pâte 1 par gravité le long de ses parois inclinées 4. La pâte 1 est donc stockée en partie basse de la trémie 3 communiquant au travers d'une ouverture 7 avec une chambre 6 apte à calibrer une quantité de pâte à diviser.

Ladite chambre 6 s'étend sous la trémie 3, sur tout ou partie de la longueur de cette dernière et est destinée à recevoir, au travers de l'écoulement par gravité de la pâte 1 depuis la trémie 3, une quantité de pâte à diviser en pâtons 2.

Un avantage de la présente invention réside dans le fait que la pâte 1 ne subit pas de contrainte d'aspiration ou de succion. En effet, le passage de la pâte 1 depuis la trémie 3 vers la chambre de gavage 6 s'effectue sous l'effet de son poids, par l'action de la gravité.

Cette chambre 6 comporte des parois latérales 5 et un fond 8. De manière particulière, au moins une de ces parois, de préférence le fond 8, est prévue mobile, permettant le dosage de la pâte 1 susceptible d'être contenue dans la chambre et d'assurer une opération de calibrage comme cela sera expliqué plus en avant dans la description.

Avantageusement, cette mobilité du fond 8 de la chambre 6 permet d'accompagner l'écoulement de la pâte 1 depuis la trémie 3. De préférence, ce fond 8 est apte à se déplacer verticalement du haut vers le bas et inversement.

Une fois la quantité de pâte 1 prédéfinie déversée dans la chambre 6, cette dernière est refermée au moins partiellement, préférentiellement de manière totale. La fermeture de la chambre 6 résulte de l'obturation de l'ouverture 7 en partie basse de la trémie 3, ceci au moyen d'un outil de coupe 9, tel une lame s'étendant longitudinalement par rapport à la trémie 3 et séparant cette dernière de la chambre 6.

Cet outil de coupe 9 est prévu mobile, de préférence, en translation horizontale, selon un déplacement transversal par rapport à l'axe longitudinal de ladite trémie 3.

L'étape suivante du procédé selon l'invention consiste en la division volumétrique en pâtons 2 de la quantité de pâte 1 contenue dans ladite chambre 6.

Pour ce faire, le dispositif permettant de mettre en oeuvre le procédé selon l'invention comprend des moyens de découpe 11 de ladite quantité de pâte 1 en pâtons 2, moyens conçus pour subdiviser cette chambre 6 en au moins vingt compartiments distincts 12 aptes à contenir un pâton 2. Ces moyens de découpe 11 se présentent sous la forme d'un ou plusieurs couteaux 13 montés mobiles en déplacement vertical sous la chambre 6. La translation du couteau 13 s'effectue sur toute la hauteur de cette dernière pour découper la pâte 1 en pâtons 2, préférentiellement de tailles similaires. Une fois cette découpe égale réalisée, chaque couteau 13 est maintenu en position haute, délimitant les compartiments 12 à l'intérieur de la chambre 6.

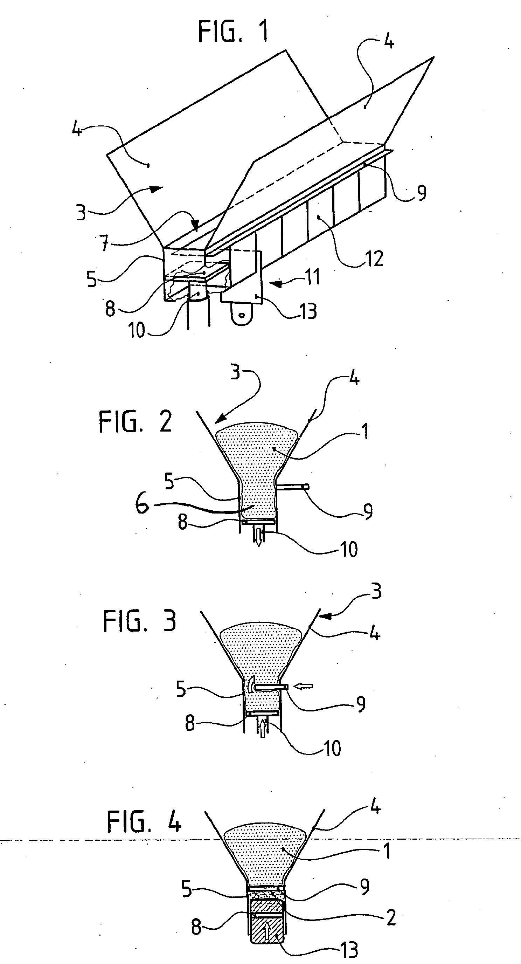

A ce sujet, les compartiments 12 peuvent être réalisés de manière à délimiter des sections transversales par rapport à ladite chambre 6, sur tout ou partie de sa longueur, comme visible sur la figure 1. Selon un autre mode de réalisation, une division longitudinale de la chambre peut être effectuée, en combinaison ou non avec une division transversale.

Les couteaux 13 pénètrent dans la chambre 6 en passant par des interstices préservés au niveau d'une des parois de cette chambre 6. Selon un mode de réalisation préféré, la paroi en question est le fond 8 que les interstices de passage des couteaux 13 délimitent en segments de paroi constituant à chaque fois le fond d'un compartiment 12. En fait, ces segments de paroi sont constitués par des pistons 10 et l'ensemble de ces derniers forme ledit fond mobile 8.

Une autre caractéristique essentielle de l'invention réside dans l'extraction depuis la chambre 6 des pâtons 2 pour les déposer sur un support 14 d'évacuation.

A ce propos, le support 14 peut être de toute nature, fixe ou mobile, mais préférentiellement un convoyeur, de type tapis roulant ou similaire. Ce support d'évacuation 14 peut acheminer les pâtons 2 en sortie de chambre 6 vers les autres étapes de fabrication des produits de boulangerie, viennoiserie, pâtisserie ou analogue.

Par ailleurs, le dispositif de division volumétrique comporte des moyens d'extraction mécanique 16 desdits pâtons 2 aptes à déposer ces derniers sur ce support d'évacuation 14.

Avantageusement, le procédé selon l'invention consiste à saisir individuellement chaque pâton 2 dans son compartiment 12 dans la chambre 6 pour le déposer sur ledit support 14.

Pour ce faire, les moyens d'extraction mécanique 16 sont constitués par des moyens de préhension 15 individuelle de chaque pâton 2. Cette préhension peut être idéalement effectuée au travers d'un dispositif à aiguilles ou griffes escamotables 17. Plus particulièrement, chaque pâton 2 peut être saisi par au moins un couple d'aiguilles 17.

Ainsi, ces moyens de préhension 15 sont aptes à prélever lesdits pâtons 2 de leur compartiment 12 dans ladite chambre 6 par pénétration au moins partielle du ou des couples d'aiguilles 17 à l'intérieur de chaque pâton 2. Pour ce faire, lesdites aiguilles 17 s'étendent verticalement en vis-à-vis l'une de l'autre et sont montées mobiles en translation de manière apte à pénétrer dans la chambre 6 à l'intérieur du pâton 2. Cette pénétration s'effectue simultanément.

On notera que les aiguilles 17 sont espacées l'une de l'autre de manière réglable, en fonction de la largeur de la chambre 6 et/ou la largeur du compartiment 12 contenant le pâton 2 à saisir.

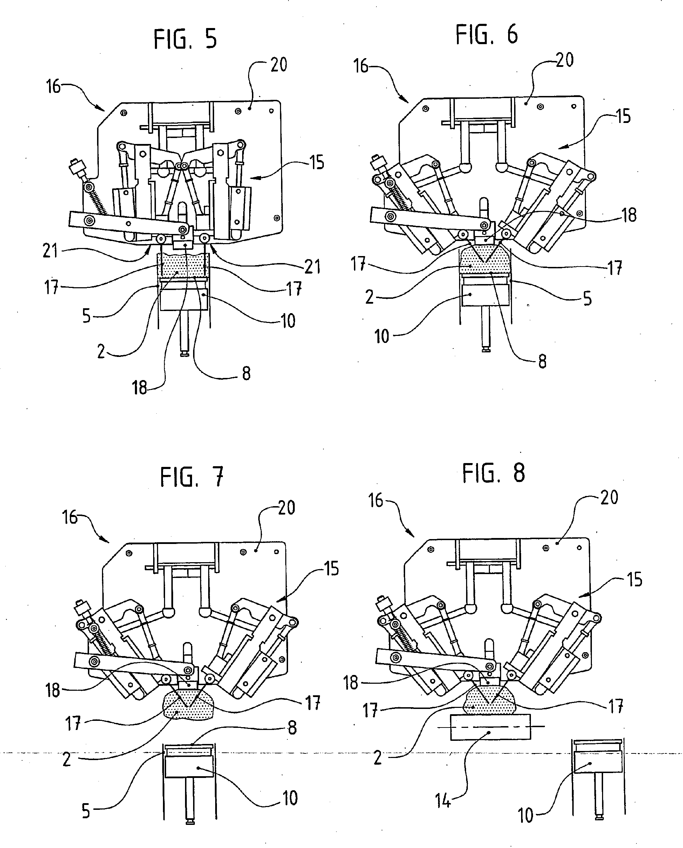

Plus particulièrement, leur espacement est tel que les aiguilles 17 puisse pénétrer dans ladite chambre 6 ou ledit compartiment 12 délimité dans cette dernière le long de deux parois latérales 5 opposées, tout en respectant une moindre distance par rapport à ces dernières. Cette configuration est visible sur la figure 5. Avantageusement, lesdites aiguilles 17 sont conçues pour pénétrer dans un compartiment 12 sur une profondeur ajustée à celle ce dernier, donc en fonction de la position du fond mobile 8 que comporte ladite chambre 6. En somme, l'étape de saisie du pâton 2 s'effectue sur une profondeur en fonction de la position du piston 10 définissant le fond du compartiment 12 qui contient ce pâton 2. Cela permet de pénétrer le pâton 2 en profondeur pour permettre son extraction sans qu'il se déforme, donc de façon qu'il soit utile d'effectuer une opération additionnelle pour conformer à nouveau ce pâton.

L'étape suivante consiste à resserrer la prise sur le pâton 2 par translation ou rotation des moyens de préhension 15. Pour ce faire, les aiguilles 17 sont réciproquement montées en translation ou en rotation de sorte que ces aiguilles 17 de chaque couple d'aiguilles 17 convergent l'une vers l'autre. Selon le mode de réalisation visible sur la figure 6, les aiguilles 17 sont mobiles en rotation de sorte que leur extrémité respective se retrouve sensiblement sur un même alignement, maintenant une prise ferme. On observera que les aiguilles 17 d'un couple d'aiguilles 17 peuvent s'étendre dans un même plan vertical ou dans des plans légèrement décalés pour pouvoir éventuellement se croiser après rotation.

En résumé, lesdits moyens de préhension 15 comprennent au moins deux aiguilles 17 mobiles suivant des directions convergentes l'une par rapport à l'autre de manière à assurer la préhension dudit pâton 2 après pénétration à l'intérieur de ce dernier.

Plus spécifiquement, dans un exemple de réalisation préférentielle, les moyens de préhension 15 comportent au moins un nombre de paires d'aiguilles 17 identique au nombre maximum de pâtons 2 qui peuvent être subdivisés dans la chambre de 6. Ces paires d'aiguilles 17 sont montées mobiles au niveau d'une palette de préhension 20 qui peut se présenter au dessus de ladite chambre 6, après l'opération de calibrage, ceci par déplacement de la chambre 6 et/ou de la trémie 3. A cet instant lesdites paires d'aiguilles 17 se trouvent dans une position escamotée dans des orifices adaptés 21, au-dessus des compartiments 12 contenant les pâtons 2 à saisir.

Il convient donc de noter que les aiguilles 17 sont commandées et articulées pour passer d'une position escamotée à une position de préhension en saillie par rapport à ladite palette 20, et inversement.

Ces moyens de préhension 15, en particulier les aiguilles 17, peuvent être conçues pour extraire directement les pâtons 2 de leurs compartiments 12.

Préférentiellement, on accompagne les pâtons 2 au cours de leur extraction par ces moyens de préhension 15 au travers du fond mobile 8 de la chambre 6. Plus particulièrement, l'extraction d'un pâton 2 saisi par les aiguilles 17 est réalisée par un accompagnement dans son déplacement au travers d'une remontée du piston 10 définissant le fond 8 d'un compartiment 12.

Plus spécifiquement, chaque piston 10 de chaque compartiment 12 est conçu apte à être contrôlé et commandé séparément en vue d'une remontée totale ou partielle des pâtons 2.

Là encore, comme pour les pistons 10 les aiguilles 17 peuvent être commandées par séries de façon à saisir alternativement deux pâtons 2, situés côte à côte dans la chambre de gavage 6, pour les déposer de manière séquencée sur le support d'évacuation 14.

Une autre caractéristiques réside dans le fait que le dispositif, avantageusement les moyens de préhension 15, comprend une butée 18 apte à maintenir un pâton 2 en vue d'en extraire les aiguilles 17 au moment de sa dépose sur ledit support d'évacuation 14. Plus particulièrement, lors de l'extraction desdites aiguilles 17, le pâton 2 est bloqué entre cette butée 18 et le support 14.

Puis le dispositif revient en position initiale pour un nouveau cycle de préhension de pâtons 2.

Ainsi, après qu'une première série de paires de aiguilles 17 s'est saisie de pâtons 2, les moyens de préhension 15 sont déplacés pour venir les déposer sur le support d'évacuation 14. Puis, dans un nouveau cycle de préhension, ils retournent au-dessus de la chambre 6 d'où peut être prélevée une seconde série de pâtons 2, par activation d'une deuxième série de paires d'aiguilles 17 (ou de la même série, mais après translation des moyens de préhension 15) puis les déposer sur ce support 14. On répète ainsi cette séquence jusqu'au vidage complet de ladite chambre 6.

L'avantage d'une saisie positive des pâtons 2 pour leur dépose sur le support d'évacuation 14, en l'occurrence un tapis de transport, consiste en ce qu'il n'y a aucun risque qu'un pâtons 2, par adhérence à un autre adjacent, entraîne celui-ci et contrarie son positionnement sur ce tapis de transport. Il convient de rappeler à ce sujet que de ce positionnement dépend largement la qualité du traitement que ces pâtons 2 sont amenés à subir en aval sur la ligne de production.

Un autre avantage de l'invention réside dans le fait que l'extraction de chaque pâton 2 peut être commandée. En effet, la chambre 6 étant divisée en compartiment 12 chacun pourvu d'un piston 10, il est possible d'extraire chaque pâton 2 de manière à les espacer sur le support 14. En particulier, une disposition régulière des pâtons 2 sur le support peut être réalisée, notamment avec un espacement équivalent entre chaque pâton 2. Un séquençage homogène des pâtons 2 est alors possible, notamment par déplacement du support 14.

En somme, ce second mode de réalisation trouvera un intérêt tout particulier dans le cadre du traitement de pâte douce, soit fluide, humide et fortement collante.

De plus, si besoin est, le procédé selon l'invention prévoit une étape complémentaire consistant à nettoyer et/ou lubrifier ladite chambre 6, afin d'améliorer l'extraction suivante, ceci de manière périodique après un cycle d'extraction de pâtons 2.

Une autre caractéristique réside dans l'approvisionnement en pâte 1 dudit dispositif selon l'invention, en particulier de la trémie 3. Pour que le dispositif assure un remplissage satisfaisant de la chambre de gavage 6, il est alors nécessaire de prendre des précautions et un soin tout particulier pour déposer la pâte 1 dans ladite trémie 3. En particulier, la pesée de pâte 1 à l'intérieur de la trémie 3 doit être constante au cours du procédé de division, tout en assurant un niveau de pâte 1 similaire en tout point de ladite trémie 3.

Pour ce faire, une trémie supplémentaire, non représentée, est disposée au-dessus de la trémie 3. Bien que de taille plus réduite, elle est, elle aussi, conformée tel un entonnoir et son ouverture en partie basse débouche dans ladite trémie 3.

Une particularité réside dans la mise en mouvement de cette trémie supplémentaire, notamment au travers d'un système de chariotage. Cette trémie en mouvement dépose donc, en partie haute de ladite trémie 3, des sections de pâte d'un volume équivalent sur toute la surface ouverte de ladite trémie 3.

En partie basse de cette trémie supplémentaire, des moyens sont aptes à réguler les portions de pâte 1 déposées, notamment au travers d'une ouverture et d'une fermeture programmées de la partie basse. Ainsi la quantité de pâte lâchée peut être réglée en fonction du débit de la trémie 3.

La dépose se fait donc séquentiellement : la trémie supplémentaire déposant, à l'arrêt, une portion de pâte 1, se déplaçant, puis déposant une autre portion, etc. Toutefois, cette séquence se répète continuellement au cours du procédé. Dans le cas de plusieurs dispositifs permettant de mettre en oeuvre le procédé selon l'invention montés en parallèle, une seule trémie supplémentaire peut être prévue pour les alimenter régulièrement en pâte 1.

## Revendications

1. Procédé de division volumétrique de pâte (1) de boulangerie, viennoiserie pâtisserie ou analogue, contenue dans une trémie (3), dans lequel :
- on laisse s'écouler ladite pâte (1) à diviser dans une chambre (6) apte à doser une quantité de pâte (1) à diviser et s'étendant sous une ouverture (7) située à la base de ladite trémie (3) ;
- on referme au moins partiellement ladite chambre (6) ;
- on procède à la division volumétrique en pâtons (2) de la quantité de pâte (1) contenue dans ladite chambre ;
- on extrait lesdits pâtons (2) divisés de ladite chambre (6) pour les déposer sur un support d'évacuation (14) **caractérisé par le fait que** : ladite pâte (1) à diviser s'écoule par gravitation et ne subit pas de contrainte d'aspiration ou de succion.

2. Procédé selon la revendication 1, **caractérisé par le fait qu'**on accompagne la pâte (1) s'écoulant dans la chambre (6) au travers d'un fond (8) mobile que comporte cette dernière.

3. Procédé selon la revendication 2, **caractérisé par le fait qu'**on dose la quantité de pâte (1) à diviser au travers de la course conférée audit fond mobile (8).

4. Procédé selon l'une quelconque de revendications précédentes, **caractérisé par le fait qu'**on saisit individuellement chaque pâton divisé (2) de la chambre (6) pour le déposer sur ledit support d'évacuation (14).

5. Procédé selon l'une quelconque de revendications précédentes, **caractérisé par le fait qu'**on accompagne les pâtons (2) au cours de leur extraction par des moyens de préhension (15) au travers d'un fond mobile (8) de la chambre (6).

6. Procédé selon l'une quelconque des revendications précédentes, **caractérisé par le fait qu'**il consiste, après extraction des pâtons (2), à nettoyer et/ou lubrifier ladite chambre (6).

## Patentansprüche

1. Verfahren zur Volumenteilung von in einem Trichter (3) enthaltenem Teig (1) für Brot, Backwaren, Feingebäck (1) oder ähnliches, bei dem :
- man den besagten zu teilenden Teig (1) in eine Kammer (6) fließen lässt, die geeignet ist, um eine Menge von zu teilenden Teig (1) zu dosieren und sich unterhalb einer Öffnung (7) erstreckt, die sich an der Basis des besagten Trichters (3) befindet ;
- die besagte Kammer (6) wenigstens teilweise geschlossen wird ;
- die Volumenteilung in Teigteile (2) der in der besagten Kammer enthaltenen Teigmenge (1) vorgenommen wird ;
- die besagten Teigstücke (2) aus der besagten Kammer (6) herausgenommen werden, um sie auf einen Abfuhrträger (14) zu legen,
**dadurch gekennzeichnet, dass** der besagte zu teilende Teig (1) durch Schwerkraft fließt und keiner Saugspannung ausgesetzt wird.

2. Verfahren nach Anspruch 1, **dadurch gekennzeichnet, dass** der in die Kammer (6) fließende Teig (1) durch einen beweglichen Boden (8), den diese letztere umfasst, begleitet wird.

3. Verfahren nach Anspruch 2, **dadurch gekennzeichnet, dass** die zu teilende Teigmenge (1) durch den diesem beweglichen Boden (8) erteilten Hub dosiert wird.

4. Verfahren nach irgendeinem der vorgehenden Ansprüche, **dadurch gekennzeichnet, dass** jedes geteilte Teigstück (2) einzeln aus der Kammer (6) herausgenommen wird, um es auf den besagten Abfuhrträger (14) zu legen.

5. Verfahren nach irgendeinem der vorgehenden Ansprüche, **dadurch gekennzeichnet, dass** die Teigstücke (2) während ihrer Herausnahme durch Greifmittel (15) durch einen beweglichen Boden (8) der Kammer (6) begleitet werden.

6. Verfahren nach irgendeinem der vorgehenden Ansprüche, **dadurch gekennzeichnet, dass** es nach der Herausnahme der Teigstücke (2) darin besteht, die besagte Kammer zu reinigen und/oder zu schmieren (6).

## Claims

1. Method for volume division of bread-making, bakery, pastry dough (1) or the like, contained in a hopper (3), wherein :
- said dough (1) to be divided is allowed to flow into a chamber (6) capable of measuring a quantity of dough (1) to be divided and extending under an opening (7) located at the base of said hopper (3) ;
- said chamber (6) is closed at least partially ;
- the volume division into dough pieces (2) of the quantity of dough (1) contained in said chamber is performed ;
- said divided dough pieces (2) are extracted from said chamber (6), in order to lay them on a discharge carrier (14),
**characterized in that** said dough (1) to be divided flows by gravity and is not submitted to any aspiration or suction stress.

2. Method according to claim 1, **characterized in that** the dough (1) flowing into the chamber (6) is accompanied through a movable bottom (8) the latter includes.

3. Method according to claim 2, **characterized in that** the quantity of dough (1) to be divided is measured through the travel distance imparted to said movable bottom (8).

4. Method according to any of the preceding claims, **characterized in that** each divided dough piece (2) is individually seized from the chamber (6), in order to lay it on said discharge carrier (14).

5. Method according to any of the preceding claims, **characterized in that** the dough pieces (2) are accompanied during their extraction by gripping means (15) through a movable bottom (8) of the chamber (6).

6. Method according to any of the preceding claims, **characterized in that** it consists, after extraction of the dough pieces (2), in cleaning and/or lubricating said chamber (6).
